(19) Europäisches Patentamt
European Patent Office
Office européen des brevets

(11) Publication number: **0 583 635 B1**

(12) # EUROPEAN PATENT SPECIFICATION

(45) Date of publication of patent specification: **13.12.95**

(51) Int. Cl.$^6$: **C03C 25/02**, C08L 83/08, G02B 6/16

(21) Application number: **93111605.7**

(22) Date of filing: **20.07.93**

(54) **Resin composition and plastic clad optical fiber produced using the same**

(30) Priority: **21.07.92 JP 193877/92**

(43) Date of publication of application:
**23.02.94 Bulletin 94/08**

(45) Publication of the grant of the patent:
**13.12.95 Bulletin 95/50**

(84) Designated Contracting States:
**DE FR GB IT**

(56) References cited:
**EP-A- 0 208 239**
**EP-A- 0 411 570**
**US-A- 4 835 057**

**DATABASE WPI Derwent Publications Ltd., London, GB; AN 92-138520 & JP-A-4 081 703**

**Mat. Res. Soc. Symp. Proc. Vol 88,1987 Bagley et al " The use of an organosilsesquioxane..." *whole article***

(73) Proprietor: **SUMITOMO ELECTRIC INDUSTRIES, LTD**
**5-33, Kitahama 4-chome,**
**Chuo-ku**
**Osaka-shi,**
**Osaka-fu 541 (JP)**

(72) Inventor: **Mishima, Takayuki, c/o Osaka Works**
**Sumitomo Elec. Indu., Ltd.,**
**1-3, Shimaya 1-chome**
**Konohana-ku,**
**Osaka-shi,**
**Osaka (JP)**
Inventor: **Nishimoto, Hiroaki, c/o Osaka Works**
**Sumitomo Elec. Indu., Ltd.,**
**1-3, Shimaya 1-chome**
**Konohana-ku,**
**Osaka-shi,**
**Osaka (JP)**
Inventor: **Okumi, Shinsuke, c/o Osaka Works**
**Sumitomo Elec. Indu., Ltd.,**
**1-3, Shimaya 1-chome**
**Konohana-ku,**
**Osaka-shi,**
**Osaka (JP)**
Inventor: **Yamanaka, Hiroshi, c/o Osaka Works**
**Sumitomo Elec. Indu., Ltd.,**
**1-3, Shimaya 1-chome**
**Konohana-ku,**
**Osaka-shi,**
**Osaka (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 583 635 B1

(74) Representative: **Grünecker, Kinkeldey, Stockmair & Schwanhäusser Anwaltssozietät**
**Maximilianstrasse 58**
**D-80538 München (DE)**

## Description

### FIELD OF THE INVENTION

The present invention relates to a photocurable resin composition and a plastic clad optical fiber employing as the cladding a cured resin obtained from the resin composition.

### BACKGROUND OF THE INVENTION

Hitherto, examples of known cladding materials for plastic clad optical fibers include a silicone resin as described in JP-A-58-30703, a polyfluoroalkyl methacrylate copolymer as described in JP-A-61-66706, and a vinylidene fluoride-tetrafluoroethylene copolymer as described in JP-B-56-41966. Further, cladding materials obtained from ultraviolet-curable resin compositions have been proposed as disclosed in JP-A-62-250047 and U.S. Patent 4,707,076. Since these resin compositions come to have a crosslinked structure through ultraviolet curing, they have advantages that they show excellent mechanical strength and contribute to an improvement in production speed for optical fibers, which advantages have not been possessed by conventional compositions. (The term "JP-A" as used herein means an "unexamined published Japanese patent application", and the term "JP-B" as used herein means an "examined Japanese patent publication".)

These cladding materials, however, have become unable to meet a high degree of recent requirements such as simplification of connector fitting by a crimp procedure and retention of mechanical strength at high temperatures. Illustratively stated, the silicone resin has insufficient mechanical strength and, hence, ends of the optical fibers having claddings of the silicone resin are unable to be treated by connector fitting by a crimp procedure. The polyfluoroalkyl methacrylate copolymer, although excellent in transparency, shows poor adhesion to the core glass, and the connector fit by a crimp procedure is pulled out under a low tensile stress. The vinylidene fluoride-tetrafluoroethylene copolymer causes a large loss due to absorption and scattering and is hence unable to attain a reduction of loss in optical fibers.

The ultraviolet-curable resin composition, such as fluorinated acrylate, is frequently used in fibers as a preferred cladding material, because it attains excellent fiber production efficiency owing to its high curing rate and because the resin itself has excellent mechanical strength and causes little optical transmission loss. This material, however, has a problem that the mechanical strength thereof decreases considerably at temperatures of 80 °C and higher and this leads to a decrease in the bonding strength between optical fiber and connector, core projection, etc.

A cladding material comprising an ultraviolet-curable ladder silicone has been proposed for attaining improved heat resistance as described in JP-A-4-81703. Although an optical fiber produced using this material does not undergo decrease in the bonding strength between optical fiber and connector even at elevated temperatures, the cladding material has so poor flexibility, i.e., is so brittle, that the permissible minimum bending radius of the fiber is large, thus posing problems concerning fiber production and use.

### SUMMARY OF THE INVENTION

An object of the present invention is to provide a photocurable resin composition capable of giving a cladding which has high mechanical strength even at elevated temperatures and is highly flexible.

Another object of the invention is to provide a plastic clad optical fiber which is free from the above-described problems.

Other objects and effects of the present invention will be apparent from the following description.

The present invention provides a resin composition comprising

(A) a ladder silicone represented by formula (I):

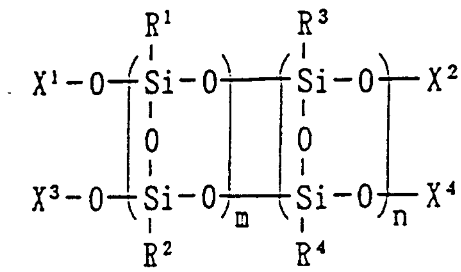

(I)

wherein $R^1$ represents a group having an unsaturated bond; $R^2$ represents an alkyl group, an aryl group, or a fluoroalkyl group; $R^3$ and $R^4$ each represents a group having an unsaturated bond, an alkyl group, an aryl group, or a fluoroalkyl group; $X^1$, $X^2$, $X^3$, and $X^4$ each represents hydrogen atom, an alkyl group, or a polyorganosiloxane group; m represents a number of 2 or larger; and n represents a number of 0 or larger, provided that when n is 0, $R^2$ is a fluoroalkyl group,

(B) a linear silicone represented either by formula (II) or (III):

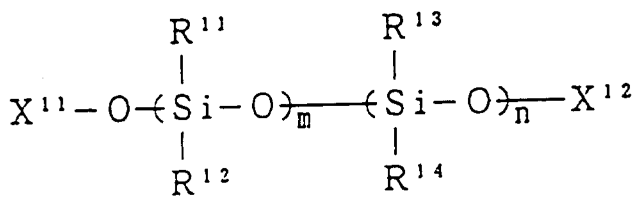

(II)

wherein $R^{11}$ represents a group having an unsaturated bond; $R^{12}$ represents an alkyl group, an aryl group, or a fluoroalkyl group; $R^{13}$ and $R^{14}$ each represents a group having an unsaturated bond, an alkyl group, an aryl group, or a fluoroalkyl group; $X^{11}$ and $X^{12}$ each represents hydrogen atom or an alkyl group; m represents a number of 2 or larger; and n represents a number of 0 or larger, provided that when n is 0, $R^{12}$ is a fluoroalkyl group,

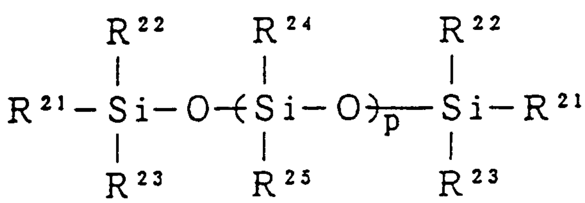

(III)

wherein $R^{21}$ represents a group having an unsaturated bond; $R^{22}$ represents an alkyl group or an aryl group; $R^{23}$ represents a group having an unsaturated bond, an alkyl group, or an aryl group; $R^{24}$ represents a fluoroalkyl group; $R^{25}$ represents an alkyl group or an aryl group; and p represents a number of 1 or larger, and

(C) a photopolymerization initiator.

The present invention also provides a plastic clad optical fiber which comprising a glass core having thereon a cladding material obtained by curing the above resin composition.

## DETAILED DESCRIPTION OF THE INVENTION

In the ladder silicone (A) and the linear silicone (B), the unsaturated bond is preferably a carbon-carbon double bond. Examples of the group having an unsaturated bond include a vinyl group, an allyl group, groups having excellent reactivity such as an acryloyl group and a methacryloyl group, and alkyl and aryl groups having these functional groups. The group having an unsaturated bond is preferably an alkyl group

containing an acryloyl group or a methacryloyl group.

In the ladder silicone (A) and linear silicone (B), the fluoroalkyl group is preferably a trifluoroethyl group or a trifluoropropyl group; the alkyl group is preferably those having 6 or less carbon atoms, more preferably a methyl group, an ethyl group, a propyl group, or a butyl group; and the aryl group is preferably a phenyl group or an alkyl-substituted phenyl group.

In the ladder silicone (A), the polyorganosiloxiane group is preferably a linear polyorganosiloxiane group having from 2 to 200 silicon atoms.

In the ladder silicone (A), m is preferably from 2 to 1,000, more preferably from 2 to 100, and n is preferably from 0 to 1,000, more preferably from 0 to 100.

Specific examples of the ladder silicone (A) include the following.

A-1

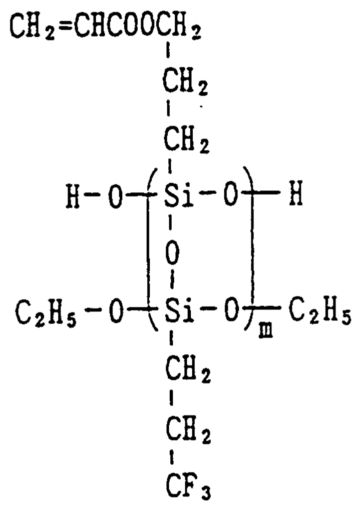

(where m is a number of 2 to 1,000.)

A-2

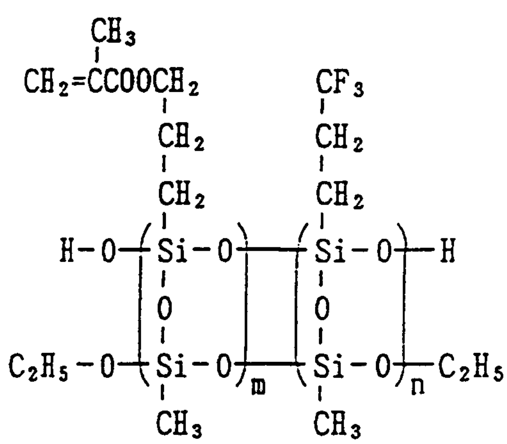

(where m is a number of 2 to 1,000 and n is a number of 1 to 1,000.)

A-3

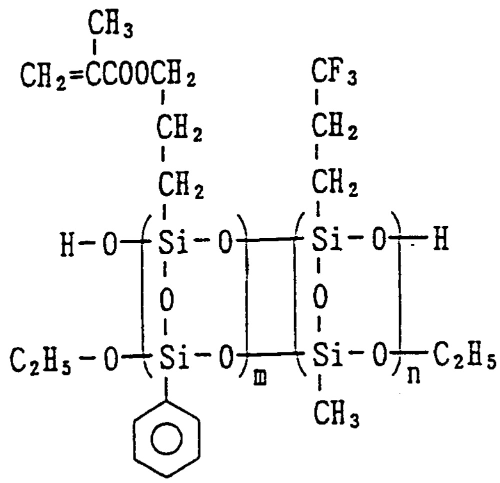

(where m is a number of 2 to 1,000 and n is a number of 1 to 1,000.)

A-4

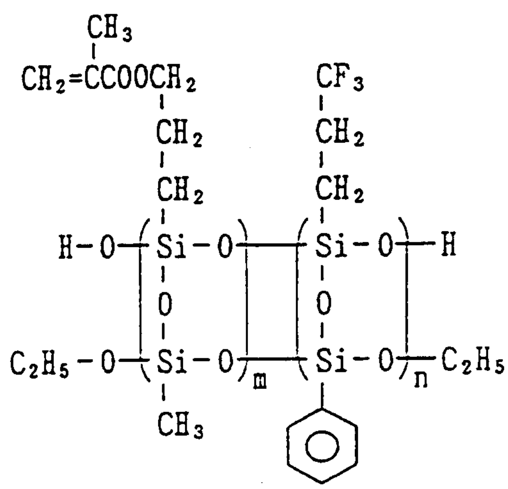

(where m is a number of 2 to 1,000 and n is a number of 1 to 1,000.)

In the linear silicone (B), m is preferably from 2 to 100, more preferably from 2 to 50, n is preferably from 0 to 100, more preferably from 0 to 50, and p is preferably from 1 to 100, more preferably from 1 to 50.

Specific examples of the linear silicone (B) include the following.

B-1

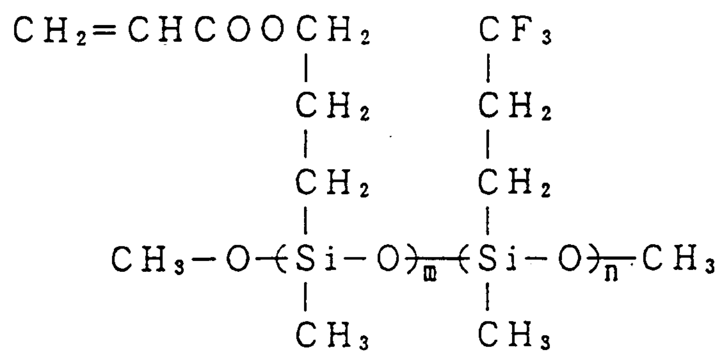

(where m is a number of 2 to 100 and n is a number of 1 to 100.)

B-2

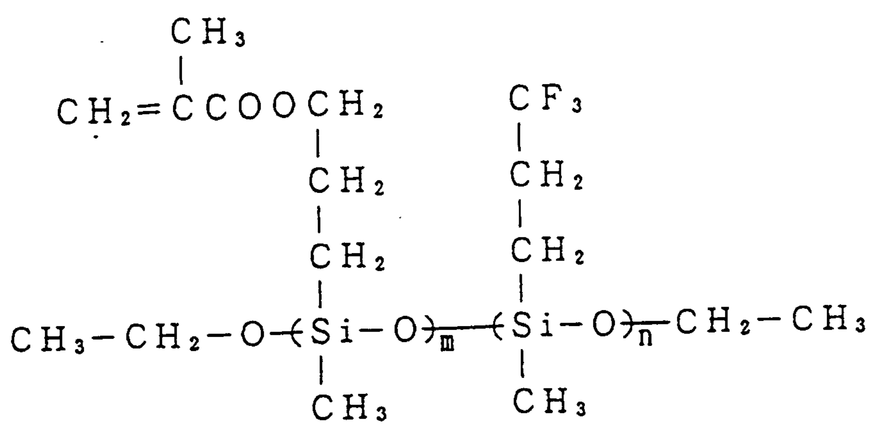

(where m is a number of 2 to 100 and n is a number of 1 to 100.)

B-3

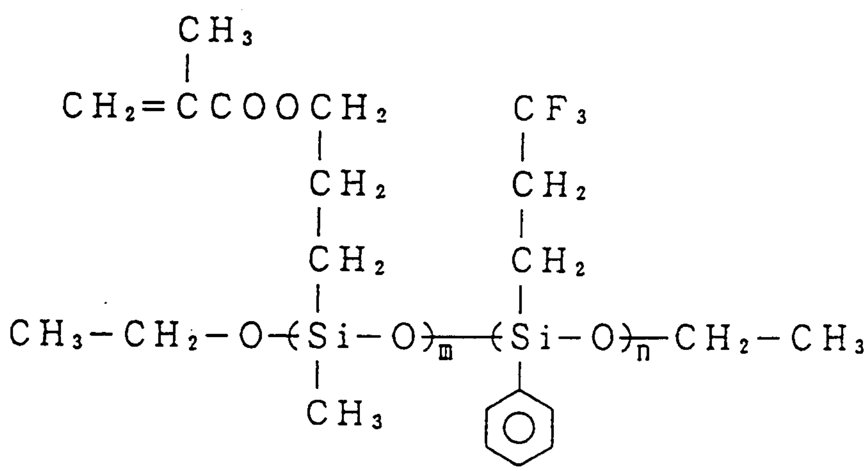

(where m is a number of 2 to 100 and n is a number of 1 to 100.)

B-4

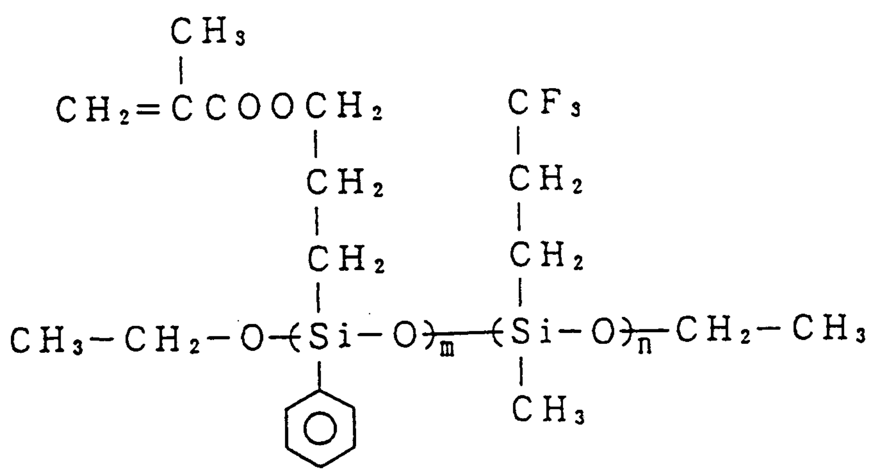

(where m is a number of 2 to 100 and n is a number of 1 to 100.)

B-5

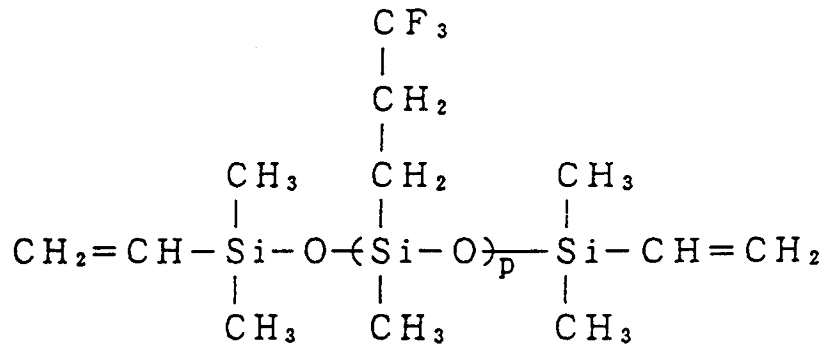

(where p is a number of 1 to 100.)

B-6

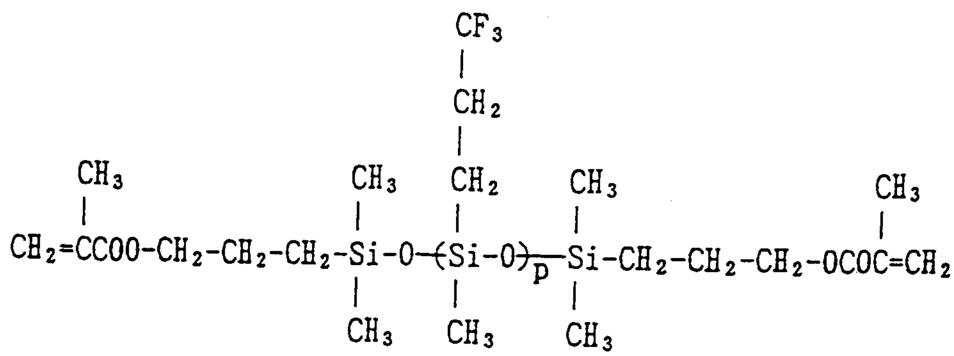

(where p is a number of 1 to 100.)

B-7

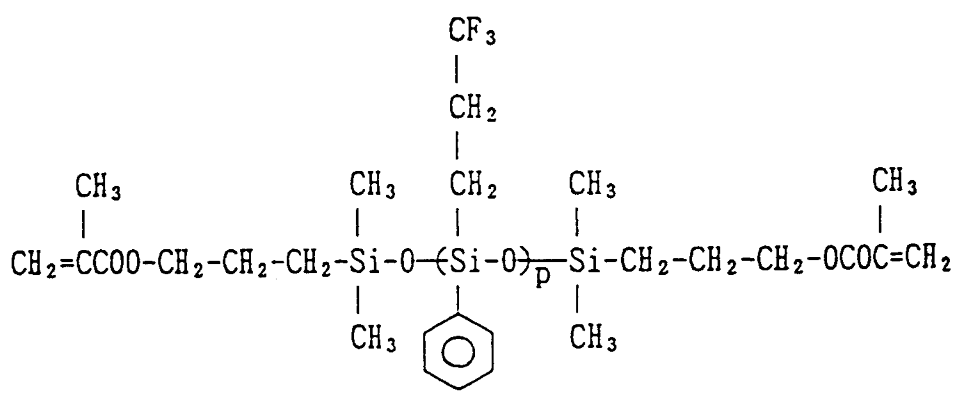

(where p is a number of 1 to 100.)

The photopolymerization initiator (C) is preferably a compound which readily generates a free radical upon ultraviolet irradiation. Examples of such compound include benzophenone, acetophenone, benzil, benzoin, benzoin methyl ether, benzoin isobutyl ether, benzyldimethylketal, α,α'-azobisisobutyronitrile, benzoyl peroxide, 1-hydroxycyclohexyl phenyl ketone, 2,2-dimethoxy-2-phenylacetophenone, and 2-hydroxy-2-methyl-1-phenylpropan-1-one. Of these, 1-hydroxycyclohexyl phenyl ketone and 2-hydroxy-2-methyl-1-phenylpropan-1-one are especially preferred when the composition is to be used as the cladding material for an ultraviolet-transmitting optical fiber.

The amount of the ladder silicone (A) is preferably from 39.9 to 99.89% by weight, more preferably from 59.9 to 89.9% by weight, based on the total amount of the resin composition. The amount of the linear silicone (B) is preferably from 0.1 to 60% by weight, more preferably from 10 to 40% by weight, based on the total amount of the resin composition. The amount of the photopolymerization initiator (C) is preferably from 0.01 to 10% by weight, more preferably from 0.01 to 1% by weight, based on the total amount of the resin composition.

The viscosity of the resin composition is preferably from 100 to 10,000 cps in order that the composition be applied on a glass core uniformly at a small thickness. The thickness of the cladding is preferably from 1 to 100 µm, and more preferably from 5 to 75 µm.

The glass core used in the present invention is not particularly limited, and examples thereof include glass core made of quartz glass or optical glass, such as pure quartz glass and germanium-containing quartz glass. The diameter of the glass core is generally from 50 to 3,000 µm, such as 230, 250, 400, 800, or 1,000 µm.

The resin composition is applied on a glass core by such a coating method as die coating or spray coating, and is then cured by being irradiated with actinic light such as ultraviolet rays to form a cladding. The coating method is not limited to these methods, as long as a uniform thickness of the cladding can be obtained. Upon coating, a solvent should not be used. Thus, a plastic clad optical fiber according to the present invention can be produced. Although the irradiation dose may be suitably determined according to the kinds and amounts of the compounds contained in the resin composition, it is generally from 10 to 5,000 $mJ/cm^2$.

Since the plastic clad optical fiber of the present invention employs, as the cladding, a cured resin obtained from the photocurable resin composition containing the ladder silicone (A) having excellent heat resistance, it shows excellent mechanical properties even at high temperatures and undergoes neither a considerable decrease in optical fiber/connector bonding strength nor core projection, while retaining the advantage of excellent production efficiency, unlike optical fibers produced using a thermosetting resin. Further, the plastic clad optical fiber of the present invention is highly flexible and the minimum bending radius thereof is sufficiently small, because of the incorporation of the linear silicone (B). Furthermore, since the cladding material has sufficiently high mechanical strength, fiber ends can be treated by the connector fitting by a crimp procedure.

The present invention will be explained below in more detail by reference to the following Examples and Comparative Examples, but the invention is not construed as being limited thereto. In the Examples and Comparative Examples, all parts are by weight unless otherwise indicated.

## EXAMPLES 1 AND 2 AND COMPARATIVE EXAMPLES 1 AND 2

A glass rod was drawn into fibers having an outer diameter of 200 µm. Immediately thereafter, the fibers were coated with the resin compositions having the formulations shown in Table 1 below. The coated resin composition was then cured with ultraviolet ray to form claddings, thereby obtaining plastic clad optical fibers having an outer diameter of 230 µm. In Table 1, the amounts of the components for the formulations are shown in terms of parts by weight.

Table 2 summarizes properties of the optical fibers to which a crimp type optical connector had been fitted, i.e., the retention strength between the optical fiber and a connector, the core protrusion, and the permissible minimum bending radius.

The core protrusion was measured in such a manner that the optical fiber was aged at 85°C for 1,000 hours, and it was observed by a microscope to determine the distance between the tip end of the connector and the tip end of the optical fiber. The permissible minimum bending radius was measured in such a manner that the optical fiber was wound on cylinders having various radii, and the maximum radius at which the optical fiber was broken down was determined as the permissible minimum bending radius.

TABLE 1

| | Example 1 | Example 2 | Comparative Example 1 | Comparative Example 2 |
|---|---|---|---|---|
| Ladder silicone | 70 | 70 | 99 | - |
| Linear silicone 1 | 29 | - | - | - |
| Linear silicone 2 | - | 29 | - | - |
| Acrylic copolymer | - | - | - | 14 |
| Heptadecafluorodecyl acrylate | - | - | - | 64 |
| Neopentyl glycol diacrylate | - | - | - | 15 |
| Trimethylolpropane triacrylate | - | - | - | 4 |
| Trimethoxyvinylsilane | - | - | - | 2 |
| 1-Hydroxycyclohexyl phenyl ketone | 1 | 1 | 1 | 1 |

Ladder silicone:

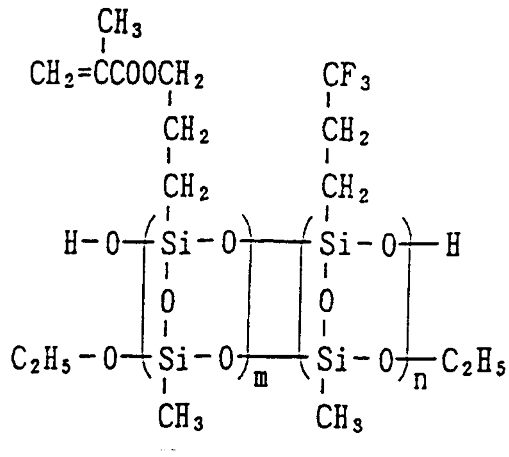

(where m is a number of 10 to 30 and n is a number of 10 to 30.)

Linear silicone 1:

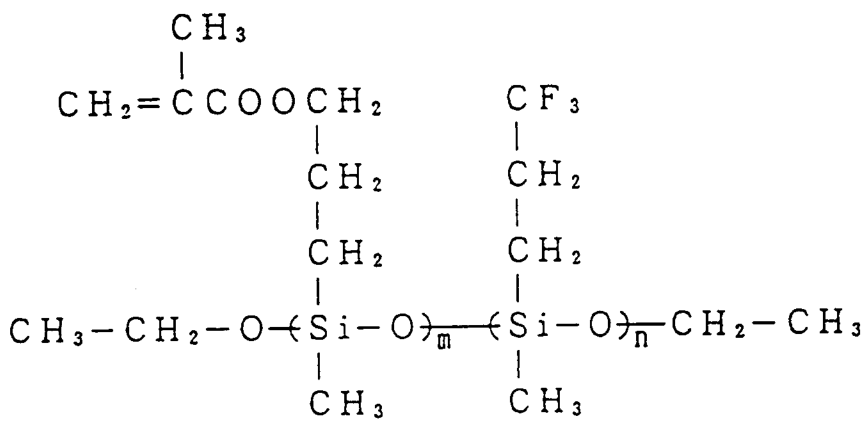

(where m is a number of 5 to 20 and n is a number of 5 to 20.)

Linear silicone 2:

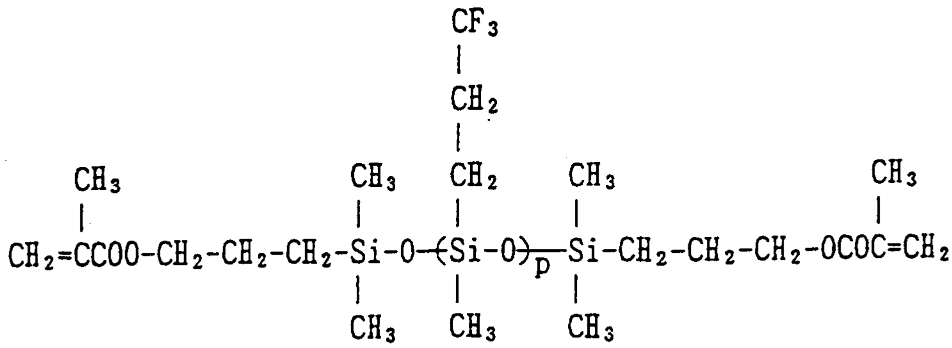

(where p is 20.)

Acrylic copolymer:

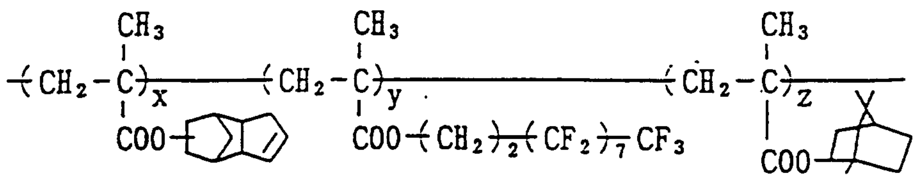

(x/y/z = 1/8/1)

TABLE 2

| | Example 1 | Example 2 | Comparative Example 1 | Comparative Example 2 |
|---|---|---|---|---|
| Retention strength between optical fiber and connector (kg) | | | | |
| at 25°C | 2.5 | 2.2 | 2.4 | 1.7 |
| at 85°C | 1.9 | 1.8 | 1.8 | 0.6 |
| Core protrusion * (μm) | -2 to +1 | -2 to +1 | -2 to +2 | -23 to +17 |
| Permissible bending radius (mm) | 16 | 15 | 41 | 15 |

Note: * After 1,000 hours at 85°C

The plastic clad optical fiber according to the present invention undergoes only a slight decrease in mechanical property at a high temperature, suffers only a slight decrease in retention strength between the crimp type connector and the optical fiber even at a high temperature (85 °C or higher), and incurs only slight core protrusion from the connector tip end after being allowed to stand at a high temperature. In addition, the optical fiber is highly flexible and has a sufficiently small permissible bending radius.

The plastic clad optical fiber according to the present invention is useful as, for example, an optical fiber for a medium- to short-distance optical communication system in which the optical fiber is used at a high temperature after a connector is press-fitted thereto.

## Claims

1. A resin composition comprising
(A) a ladder silicone represented by formula (I):

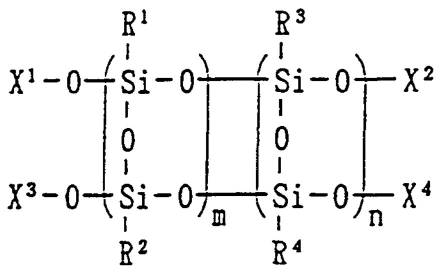

(I)

wherein $R^1$ represents a group having an unsaturated bond; $R^2$ represents an alkyl group, an aryl group, or a fluoroalkyl group; $R^3$ and $R^4$ each represents a group having an unsaturated bond, an alkyl group, an aryl group, or a fluoroalkyl group; $X^1$, $X^2$, $X^3$, and $X^4$ each represents hydrogen atom, an alkyl group, or a polyorganosiloxane group; m represents a number of 2 or larger; and n represents a number of 0 or larger, provided that when n is 0, $R^2$ is a fluoroalkyl group,
(B) a linear silicone represented either by formula (II) or (III):

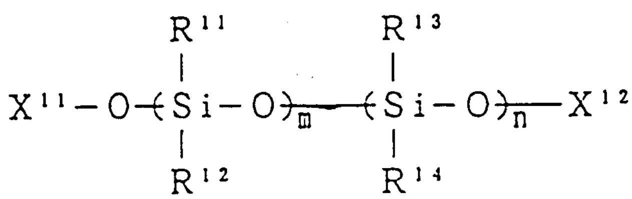

(II)

wherein $R^{11}$ represents a group having an unsaturated bond; $R^{12}$ represents an alkyl group, an aryl group, or a fluoroalkyl group; $R^{13}$ and $R^{14}$ each represents a group having an unsaturated bond, an alkyl group, an aryl group, or a fluoroalkyl group; $X^{11}$ and $X^{12}$ each represents hydrogen atom or an alkyl group; m represents a number of 2 or larger; and n represents a number of 0 or larger, provided that when n is 0, $R^{12}$ is a fluoroalkyl group,

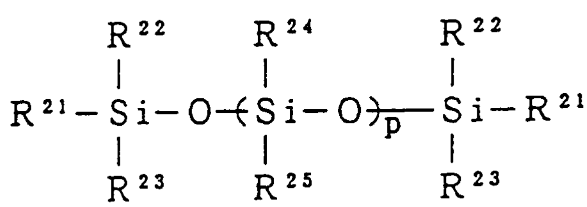

(III)

wherein $R^{21}$ represents a group having an unsaturated bond; $R^{22}$ represents an alkyl group or an aryl group; $R^{23}$ represents a group having an unsaturated bond, an alkyl group, or an aryl group; $R^{24}$ represents a fluoroalkyl group; $R^{25}$ represents an alkyl group or an aryl group; and p represents a number of 1 or larger, and
(C) a photopolymerization initiator.

2. A resin composition as claimed in claim 1, wherein the amount of said ladder silicone (A) is from 39.9 to 99.89% by weight, the amount of said linear silicone (B) is from 0.1 to 60% by weight, and the amount of said photopolymerization initiator (C) is from 0.01 to 10% by weight, all based on the total amount of said resin composition.

**3.** A plastic clad optical fiber comprising a glass core having thereon a cladding material obtained by curing a resin composition comprising

(A) a ladder silicone represented by formula (I):

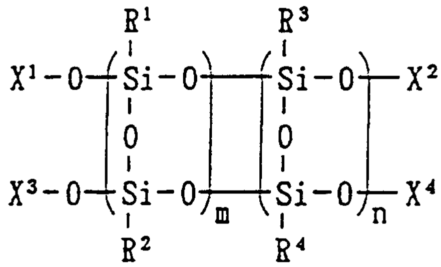

(I)

wherein $R^1$ represents a group having an unsaturated bond; $R^2$ represents an alkyl group, an aryl group, or a fluoroalkyl group; $R^3$ and $R^4$ each represents a group having an unsaturated bond, an alkyl group, an aryl group, or a fluoroalkyl group; $X^1$, $X^2$, $X^3$, and $X^4$ each represents hydrogen atom, an alkyl group, or a polyorganosiloxane group; m represents a number of 2 or larger; and n represents a number of 0 or larger, provided that when n is 0, $R^2$ is a fluoroalkyl group,

(B) a linear silicone represented either by formula (II) or (III):

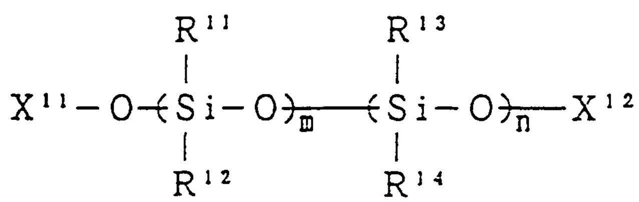

(II)

wherein $R^{11}$ represents a group having an unsaturated bond; $R^{12}$ represents an alkyl group, an aryl group, or a fluoroalkyl group; $R^{13}$ and $R^{14}$ each represents a group having an unsaturated bond, an alkyl group, an aryl group, or a fluoroalkyl group; $X^{11}$ and $X^{12}$ each represents hydrogen atom or an alkyl group; m represents a number of 2 or larger; and n represents a number of 0 or larger, provided that when n is 0, $R^{12}$ is a fluoroalkyl group,

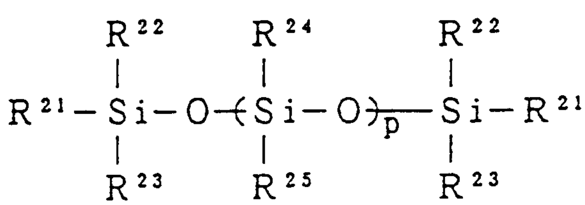

(III)

wherein $R^{21}$ represents a group having an unsaturated bond; $R^{22}$ represents an alkyl group or an aryl group; $R^{23}$ represents a group having an unsaturated bond, an alkyl group, or an aryl group; $R^{24}$ represents a fluoroalkyl group; $R^{25}$ represents an alkyl group or an aryl group; and p represents a number of 1 or larger; and

(C) a photopolymerization initiator.

**4.** A plastic clad optical fiber as claimed in claim 3, wherein the amount of said ladder silicone (A) is from 39.9 to 99.89% by weight, the amount of said linear silicone (B) is from 0.1 to 60% by weight, and the amount of said photopolymerization initiator (C) is from 0.01 to 10% by weight, all based on the total amount of said resin composition.

**Patentansprüche**

1. Harzzusammensetzung, umfassend
(A) ein Leitersilicon, dargestellt durch Formel (I):

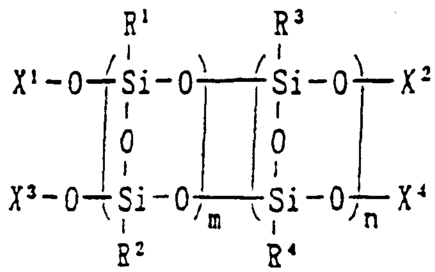

(I)

worin $R^1$ eine Gruppe mit einer ungesättigten Bindung bedeutet; $R^2$ eine Alkyl-Gruppe, eine Aryl-Gruppe oder eine Fluoralkyl-Gruppe bedeutet; $R^3$ und $R^4$ jeweils eine Gruppe mit einer ungesättigten Bindung, eine Alkyl-Gruppe, eine Aryl-Gruppe oder eine Fluoralkyl-Gruppe bedeuten; $X^1$, $X^2$, $X^3$ und $X^4$ jeweils ein Wasserstoff-Atom, eine Alkyl-Gruppe oder eine Polyorganosiloxan-Gruppe bedeuten; m 2 oder eine höhere Zahl bedeutet; und n 0 oder eine höhere Zahl bedeutet, mit der Maßgabe, daß wenn n 0 ist, $R^2$ eine Fluoralkyl-Gruppe ist;
(B) ein lineares Silicon, dargestellt durch eine der Formeln (II) oder (III):

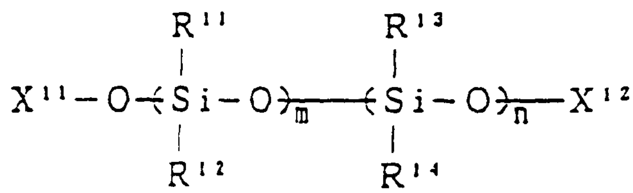

(II)

worin $R^{11}$ eine Gruppe mit einer ungesättigten Bindung bedeutet; $R^{12}$ eine Alkyl-Gruppe, eine Aryl-Gruppe oder eine Fluoralkyl-Gruppe bedeutet; $R^{13}$ und $R^{14}$ jeweils eine Gruppe mit einer ungesättigten Bindung, eine Alkyl-Gruppe, eine Aryl-Gruppe oder eine Fluoralkyl-Gruppe bedeuten; $X^{11}$ und $X^{12}$ jeweils ein Wasserstoff-Atom oder eine Alkyl-Gruppe bedeuten; m 2 oder eine höhere Zahl bedeutet; und n 0 oder eine höhere Zahl bedeutet, mit der Maßgabe, daß wenn n 0 ist, $R^{12}$ eine Fluoralkyl-Gruppe ist;

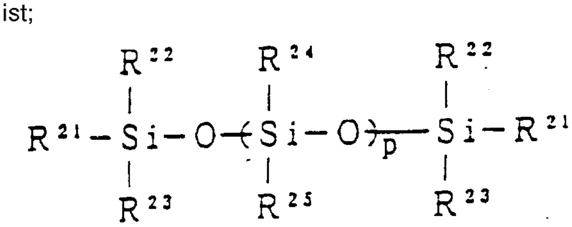

(III)

worin $R^{21}$ eine Gruppe mit einer ungesättigten Bindung bedeutet; $R^{22}$ eine Alkyl-Gruppe oder eine Aryl-Gruppe bedeutet; $R^{23}$ eine Gruppe mit einer ungesättigten Bindung, eine Alkyl-Gruppe oder eine Aryl-Gruppe bedeutet; $R^{24}$ eine Fluoralkyl-Gruppe bedeutet; $R^{25}$ eine Alkyl-Gruppe oder eine Aryl-Gruppe bedeutet; und p 1 oder eine höhere Zahl bedeutet; und
(C) einen Photopolymerisationsinitiator.

2. Harzzusammensetzung nach Anspruch 1, wobei die Menge an Leitersilicon (A) 39,9 bis 99,89 Gew.-% beträgt, die Menge an linearem Silicon (B) 0,1 bis 60 Gew.-% beträgt, und die Menge an Photopolymerisationsinitiator (C) 0,01 bis 10 Gew.-% beträgt, jeweils bezogen auf die Gesamtmenge der Harzzusammensetzung.

**3.** Kunststoffummantelte optische Faser, umfassend einen Glaskern mit einem Mantelmaterial darauf, das erhalten wird durch Härten einer Harzzusammensetzung, umfassend

(A) ein Leitersilicon, dargestellt durch Formel (I):

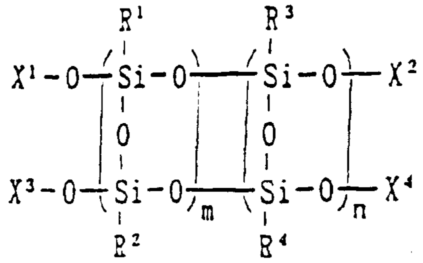

(I)

worin $R^1$ eine Gruppe mit einer ungesättigten Bindung bedeutet; $R^2$ eine Alkyl-Gruppe, eine Aryl-Gruppe oder eine Fluoralkyl-Gruppe bedeutet; $R^3$ und $R^4$ jeweils eine Gruppe mit einer ungesättigten Bindung, eine Alkyl-Gruppe, eine Aryl-Gruppe oder eine Fluoralkyl-Gruppe bedeuten; $X^1$, $X^2$, $X^3$ und $X^4$ jeweils ein Wasserstoff-Atom, eine Alkyl-Gruppe oder eine Polyorganosiloxan-Gruppe bedeuten; m 2 oder eine höhere Zahl bedeutet; und n 0 oder eine höhere Zahl bedeutet, mit der Maßgabe, daß wenn n 0 ist, $R^2$ eine Fluoralkyl-Gruppe ist;

(B) ein lineares Silicon, dargestellt durch eine der Formeln (II) oder (III):

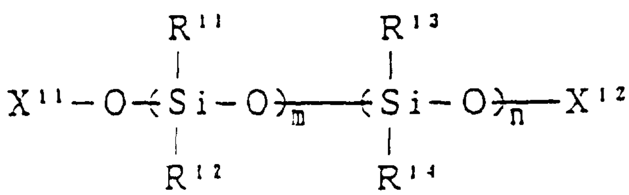

(II)

worin $R^{11}$ eine Gruppe mit einer ungesättigten Bindung bedeutet; $R^{12}$ eine Alkyl-Gruppe, eine Aryl-Gruppe oder eine Fluoralkyl-Gruppe bedeutet; $R^{13}$ und $R^{14}$ jeweils eine Gruppe mit einer ungesättigten Bindung, eine Alkyl-Gruppe, eine Aryl-Gruppe oder eine Fluoralkyl-Gruppe bedeuten; $X^{11}$ und $X^{12}$ jeweils ein Wasserstoff-Atom oder eine Alkyl-Gruppe bedeuten; m 2 oder eine höhere Zahl bedeutet; und n 0 oder eine höhere Zahl bedeutet, mit der Maßgabe, daß wenn n 0 ist, $R^{12}$ eine Fluoralkyl-Gruppe ist;

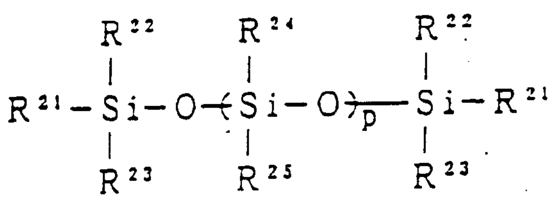

(III)

worin $R^{21}$ eine Gruppe mit einer ungesättigten Bindung bedeutet; $R^{22}$ eine Alkyl-Gruppe oder eine Aryl-Gruppe bedeutet; $R^{23}$ eine Gruppe mit einer ungesättigten Bindung, eine Alkyl-Gruppe oder eine Aryl-Gruppe bedeutet; $R^{24}$ eine Fluoralkyl-Gruppe bedeutet; $R^{25}$ eine Alkyl-Gruppe oder eine Aryl-Gruppe bedeutet; und p 1 oder eine höhere Zahl bedeutet; und

(C) einen Photopolymerisationsinitiator.

**4.** Kunststoffummantelte optische Faser nach Anspruch 3, wobei die Menge an Leitersilicon (A) 39,9 bis 99,89 Gew.-% beträgt, die Menge an linearem Silicon (B) 0,1 bis 60 Gew.-% beträgt, und die Menge an Photopolymerisationsinitiator (C) 0,01 bis 10 Gew.-% beträgt, jeweils bezogen auf die Gesamtmenge der Harzzusammensetzung.

**Revendications**

1. Composition de résine constituée par
(A) une silicone en échelle représentée par la formule (I) :

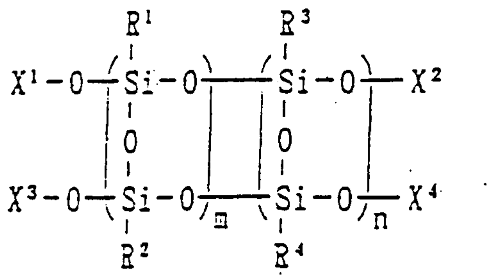

(I)

où $R^1$ représente un groupe ayant une liaison insaturée ; $R^2$ représente un groupe alkyle, un groupe aryle ou un groupe fluoroalkyle ; $R^3$ et $R^4$ représentent chacun un groupe ayant une liaison insaturée, un groupe alkyle, un groupe aryle ou un groupe fluoroalkyle ; $X^1$, $X^2$, $X^3$ et $X^4$ représentent chacun un atome d'hydrogène, un groupe alkyle ou un groupe polyorganosiloxane ; m représente un nombre de 2 ou plus ; et n représente un nombre de 0 ou plus, dans la mesure où, si n = 0, $R^2$ est un groupe fluoroalkyle,
(B) une silicone linéaire représentée par la formule (II) ou (III) :

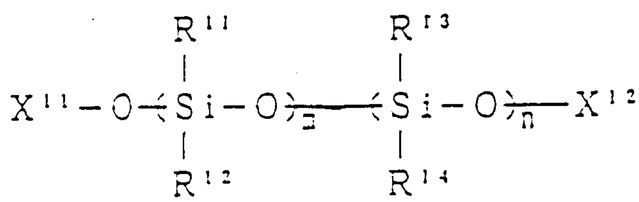

(II)

où $R^{11}$ représente un groupe ayant une liaison insaturée ; $R^{12}$ représente un groupe alkyle, un groupe aryle ou un groupe fluoroalkyle ; $R^{13}$ et $R^{14}$ représentent chacun un groupe ayant une liaison insaturée, un groupe alkyle, un groupe aryle, ou un groupe fluoroalkyle ; $X^{11}$ et $X^{12}$ représentent chacun un atome d'hydrogène ou un groupe alkyle ; m représente un nombre de 2 ou plus ; et n représente un nombre de 0 ou plus, dans la mesure où quand n est égal à 0, $R^{12}$ est un groupe fluoroalkyle,

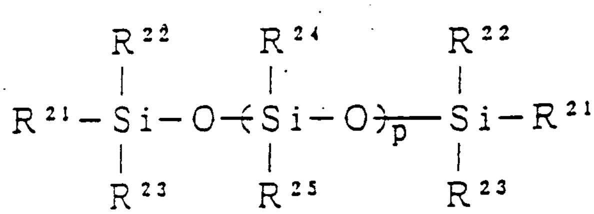

(III)

où $R^{21}$ représente un groupe ayant une liaison insaturée ; $R^{22}$ représente un groupe alkyle ou un groupe aryle ; $R^{23}$ représente un groupe ayant une liaison insaturée, un groupe alkyle ou un groupe aryle ; $R^{24}$ représente un groupe fluoroalkyle ; $R^{25}$ représente un groupe alkyle ou un groupe aryle et p représente un nombre de 1 ou plus et
(C) un initiateur de photopolymérisation.

2. Composition de résine selon la revendication 1, dans laquelle la quantité de ladite silicone en échelle (A) est située entre 39,9 et 99,89 % en masse, la quantité de ladite silicone linéaire (B) est comprise entre 0,1 et 60 % en masse et la quantité dudit initiateur de photopolymérisation (C) est comprise entre 0,01 et 10 % en masse, quantités toutes exprimées par rapport à la quantité totale de ladite composition de résine.

**3.** Fibre optique gainée d'une matière plastique, constituée d'un coeur de verre sur lequel se trouve une matière de gainage obtenue en durcissant une composition de résine constituée par

(A) une silicone en échelle représentée par la formule (I) :

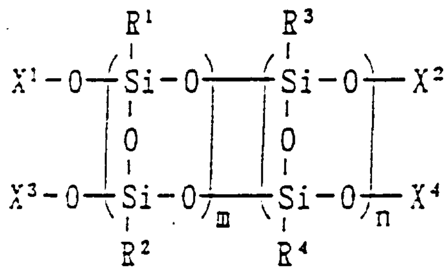

(I)

où $R^1$ représente un groupe ayant une liaison insaturée ; $R^2$ représente un groupe alkyle, un groupe aryle ou un groupe fluoroalkyle ; $R^3$ et $R^4$ représentent chacun un groupe ayant une liaison insaturée, un groupe alkyle, un groupe aryle ou un groupe fluoroalkyle ; $X^1$, $X^2$, $X^3$ et $X^4$ représentent chacun un atome d'hydrogène, un groupe alkyle ou un groupe polyorganosiloxane ; m représente un nombre de 2 ou plus ; et n représente un nombre de 0 ou plus, dans la mesure où, si n = 0, $R^2$ est un groupe fluoroalkyle,

(B) une silicone linéaire représentée par la formule (II) ou (III) :

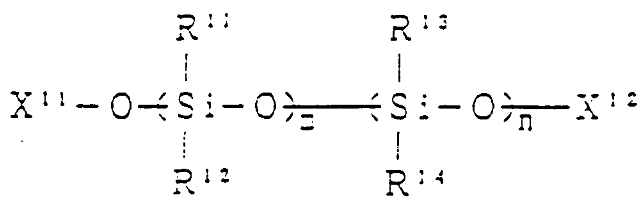

(II)

où $R^{11}$ représente un groupe ayant une liaison insaturée ; $R^{12}$ représente un groupe alkyle, un groupe aryle ou un groupe fluoroalkyle ; $R^{13}$ et $R^{14}$ représentent chacun un groupe ayant une liaison insaturée, un groupe alkyle, un groupe aryle, ou un groupe fluoroalkyle ; $X^{11}$ et $X^{12}$ représentent chacun un atome d'hydrogène ou un groupe alkyle ; m représente un nombre de 2 ou plus ; et n représente un nombre de 0 ou plus, dans la mesure où quand n est égal à 0, $R^{12}$ est un groupe fluoroalkyle,

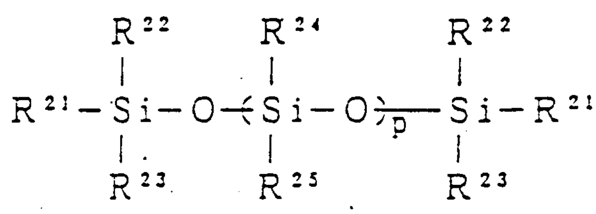

(III)

où $R^{21}$ représente un groupe ayant une liaison insaturée ; $R^{22}$ représente un groupe alkyle ou un groupe aryle ; $R^{23}$ représente un groupe ayant une liaison insaturée, un groupe alkyle ou un groupe aryle ; $R^{24}$ représente un groupe fluoroalkyle ; $R^{25}$ représente un groupe alkyle ou un groupe aryle et p représente un nombre de 1 ou plus, et

(C) un initiateur de photopolymérisation.

**4.** Fibre optique gainée d'une matière plastique selon la revendication 3 dans laquelle la quantité de ladite silicone en échelle (A) est située entre 39,9 et 99,89 % en masse, la quantité de ladite silicone linéaire (B) est comprise entre 0,1 et 60 % en masse et la quantité dudit initiateur de photopolymérisation (C) est comprise entre 0,01 et 10 % en masse, quantités toutes exprimées par rapport à la quantité totale de ladite composition de résine.